# EUROPÄISCHE PATENTANMELDUNG

(11) **EP 0 840 464 A1**
(43) Veröffentlichungstag der Anmeldung: **06.05.1998**
(21) Anmeldenummer: 96117343.2
(22) Anmeldetag: 29.10.1996
(51) Int. Cl.: H04B 1/38, H04B 7/26

(54) **Basisstation für ein Mobilfunksystem**

(71) Anmelder: SIEMENS AKTIENGESELLSCHAFT, 80333 München (DE)
(72) Erfinder: Gottlöber, Helmut, Dipl.-Ing., 82110 Germering (DE)

(57) **Zusammenfassung**

Eine Funkstation (BS) für ein Kommunikationssystem wird in ein Gehäuse (G) einer Beleuchtungseinrichtung (L) bzw. einer optischen Signalisierungseinrichtung mit einem Lichtstrahler und einer externen Stromversorgung (SV) integriert. Durch die Kombination einer Funkstation (D5) mit einer Beleuchtungseinrichtung (L) bzw. einer optischen Signalisierungseinrichtung verringert sich der Installationsaufwand beispielsweise für eine Basisstation in einem GSM-Mobilfunknetz erheblich.

## Beschreibung

Die Erfindung betrifft eine Funkstation für ein Kommunikationssystem mit einem netzseitigen kommunikationstechnischen Anschluß und mit einem Stromversorgungsanschluß.

Funkstationen sind stationäre Funkeinrichtungen, die für Kommunikationssysteme, beispielsweise Mobil-Kommunikationssysteme, z.B. das GSM (global system for mobile communication)-Mobilfunksystem oder das DECT (digital enhanced cordless telephony) Schnurlos-Telefoniesystem, die Funkschnittstelle zu mobilen oder stationären Endgeräten realisieren.

Diese Funkstationen werden in speziell dafür eingerichteten Räumlichkeiten und Behältnissen untergebracht, um sie mit der notwendigen technischen Infrastruktur zu verbinden. Zur technischen Infrastruktur gehören eine Stromversorgung, Einrichtungen zum Klimaschutz, ein kommunikationstechnischer Anschluß und Vorkehrungen für Antenneneinrichtungen der Funkstation, um eine bestimmungsgemäße Funkausbreitung zu gewährleisten.

Ein typisches Beispiel hierfür ist die Unterbringung der Funkstation in einem klimatisierten Raum, in den eine Stromversorgung, ein kommunikationstechnischer Anschluß und ein Anschluß für einen Blitzschutz herangeführt werden. Die Montage einer abgesetzten Antenne ist auf einem Dach oder einem gesonderten Mast vorgesehen. Für eine derartig installierte Funkstation ist somit ein erheblicher Aufwand an Erschließungskosten und Montagekosten notwendig.

Der Erfindung liegt die Aufgabe zugrunde, den Installationsaufwand für eine Funkstation zu verringern. Diese Aufgabe wird durch die Funkstation nach den Merkmalen des Patentanspruchs 1 oder 2 gelöst. Vorteilhafte Weiterbildungen sind den Unteransprüchen zu entnehmen.

Eine Funkstation für ein Kommunikationssystem mit einem netzseitigen kommunikationstechnischen Anschluß und mit einem Stromversorgungsanschluß wird erfindungsgemäß in ein Gehäuse einer Beleuchtungseinrichtung oder einer optischen Signalisierungseinrichtung integriert, wobei die Beleuchtungseinrichtung bzw. die optische Signalisierungseinrichtung einen Lichtstrahler und eine externe Stromversorgung enthält.

Eine Miniaturisierung von Funkstationen, siehe dazu die Europäische Patentanmeldung EP 0 690 641 A2, ermöglicht die Integration der technischen Einrichtungen einer Funkstation in kleinere Gehäuse. Eine Beleuchtungseinrichtung, wie sie durch eine Straßenlampe, eine Außenleuchte, z.B. in Haltestellenbereichen, oder durch eine Deckenbeleuchtung in Räumlichkeiten gebildet wird, weist den Vorteil auf, daß dabei bereits ein Großteil der technischen Infrastruktur mit einem Wetterschutz und einer externen Stromversorgung in einem Gehäuse vorhanden ist. Gleiches gilt für optische Signalisierungseinrichtungen. Weiterhin bieten diese Einrichtungen den Vorteil, daß sie zur Beleuchtung bzw. Versorgung von Räumen dienen, in denen sich eine größere Anzahl von Menschen aufhält. Die Montageorte dieser Einrichtungen korrespondieren damit mit den Räumen, die durch ein Kommunikationssystem besonders zu versorgen sind.

Die Integration von Funkstationen in bereits bestehende technische Einrichtungen, im Gegensatz zu einer getrennten Montage, und besonders in Beleuchtungseinrichtungen oder optische Signalisierungseinrichtung bringt den zusätzlichen Vorteil mit sich, daß Netzbetreiber keine zusätzlichen Standorte für die Funkstationen erschließen müssen, wenn eine Verdichtung des Netzes vorgenommen werden soll. Auch stadtplanerischen Anforderungen für die Gestaltung und Montage von Funkstationen kann leichter entsprochen werden, wenn bekannte Formen von Beleuchtungseinrichtungen oder optischen Signalisierungseinrichtung, wie Verkehrsampeln bzw. beleuchtete Verkehrsschilder, vorteilhaft mitgenutzt werden.

Der Stromversorgungsanschluß der Funkstation wird vorteilhafterweise an die externe Stromversorgung angeschlossen. Dadurch kann eine gesonderte Stromzufuhr für die Funkstation eingespart werden.

Vorteilhafterweise wird eine Antenneneinrichtung der Funkstation derartig montiert, daß deren Abstrahlungsdiagramm mit dem des Lichtstrahlers korrespondiert. Die Planung der Versorgung von Räumen durch Beleuchtungseinrichtungen sieht normalerweise eine Flächendeckung und eine durchgehende, möglichst gleichmäßige Beleuchtung für stark genutzte Räume vor. Eben diese Notwendigkeit liegt auch bei der funktechnischen Versorgung z.B. durch ein Mobil-Kommunikationssystem vor. Jedoch können bestimmte Räume verstärkt funktechnisch versorgt werden, wenn in ihnen eine besonders hohe Netzlast vermutet wird, dies entspricht einer Scheinwerferwirkung von Beleuchtungseinrichtungen.

Auch eine optische Signalisierungseinrichtung ist üblicherweise an Orten starker Frequentierung durch Menschen vorgesehen und richtet ihre durch den Lichtstrahler realisierte Signalisierung auf die Räume mit diesen Menschen. Somit liegt auch bei einer optischen Signalisierungseinrichtung eine Korrelation von optischen Signalisierungsraum und Versorgungsbereich durch die Funkstation vor.

Gemäß einer weiteren vorteilhaften Ausgestaltung der Funkstation wird diese mit einer Einrichtung zum Blitzschutz verbunden, die bereits für die Beleuchtungseinrichtung bzw. optische Signalisierungseinrichtung vorgesehen ist. Der Blitzschutz ist eine weitere Vorrichtung zum Wetterschutz, die oftmals in diesen Einrichtungen bereits vorhanden ist und die bei einer Installation der erfindungsgemäßen Funkstation außerhalb von festen Gebäuden nicht zusätzlich bereitgestellt zu werden braucht.

Gemäß einer vorteilhaften Weiterbildung ist eine durch die Stromversorgung gespeiste Einrichtung zur Energiespeicherung vorgesehen, die zur Versorgung der Funkstation bei abgeschalteter externer Stromversorgung bereit steht. Durch die Einrichtung zur Energiespeicherung kann die Stromversorgung der Funkstation auch bei abgeschalteter externer Stromversorgung z.B bei einer Freiluft-Beleuchtungseinrichtung während des Tages gesichert werden, bzw. bei Ausfällen der externen Stromversorgung eine Notstromversorgung zur Aufrechterhaltung der Flächendeckung des Kommunikationssystems erfolgen. Die Stromversorgung der Funkstation wird dadurch unabhängiger von der externen Stromversorgung. Eine galvanische Trennung der Funkstation von der externen Stromversorgung, die auch durch einen Trenntrafo bewirkt werden kann, vermeidet zudem, daß direkte Einwirkungen von Störungen auf die externe Stromversorgung die Funktion der Funkstation beeinträchtigen.

Vorteilhafterweise ist eine Einrichtung zum Kühlen der Funkstation mit einem aufsteigenden Luftstrom thermisch gekoppelt. Ein aufsteigender Luftstrom entsteht beispielsweise durch einen Kamineffekt, wenn warme, leichtere Luft in Bodennähe aufsteigt und damit einen Luftstrom erzeugt. Öffnungen im Gehäuse der Beleuchtungseinrichtung sind so ausgestaltet, daß sie diesen Luftstrom aufnehmen und an Einrichtungen zum Kühlen der Funkstation, beispielsweise Kühlrippen vorbeiführen und somit auch ein Kühlen der Funkstation bewirkt wird.

Der kommunikationstechnische Anschluß der Funkstation kann selbstverständlich über eine Festleitung zu weiteren Netzelementen des Kommunikationssystems erfolgen, jedoch kann dieser kommunikationstechnische Anschluß auch über eine Funkverbindung erfolgen, die den Montageort der Beleuchtungseinrichtung bzw. optischen Signalisierungseinrichtung leicht erreichen kann.

Diese Funkverbindung kann insbesondere über Infrarotsignale von weiteren derartigen Einrichtungen oder Signale im Frequenzband von Straßenverkehrskommunikationseinrichtungen sichergestellt werden. Für Infrarotverbindungen sind wirtschaftliche Baugruppen verfügbar, die eine kostengünstige Installation des kommunikationstechnischen Anschluß erlauben. Soll das Frequenzband von Straßenverkehrskommunikationseinrichtungen genutzt werden, dann ergibt sich insbesondere bei einer Installation entlang von Straßen der Vorteil, daß keine zusätzliche Frequenzzuteilung nötig ist.

Gemäß einer weiteren vorteilhaften Ausbildung der Funkstation ist in diese an einem Standort mit freier Abstrahlung in direkter Linie zur Erde in einer Montagehöhe von mindestens 2,5 Metern montiert. Die freie Abstrahlung von der Antenneneinrichtung in Richtung Endgerät verhindert eine Abschattung der Funksignale und ermöglicht es, die zur Versorgung einer Kommunikationsverbindung nötige Sendeenergie gering zu halten. Die Montagehöhe prägt insbesondere den Funkbereich der Funkstation, so daß eine Mindest-Montagehöhe zur Gewährleistung eines ausreichenden Funkbereiches vorteilhaft ist.

Beleuchtungseinrichtungen sind, wenn sie als Straßenlampen ausgeprägt sind, meist freistehend, so daß eine Einrichtung zur Solarstromversorgung einfach an ihnen zu montieren ist. Diese Einrichtung zur Solarstromversorgung trägt dazu bei, die Stromaufnahme über eine externe Stromversorgung zu verringern. Gleiches gilt für optische Signalisierungseinrichtungen.

Die erfindungsgemäße Funkstation soll im folgenden unter Bezugnahme auf die Figuren anhand von Ausführungsbeispielen näher erläutert werden. Die Erfindung wird bezüglich einer Basisstation für ein GSM-Mobilfunksystem erläutert. Die erfindungsgemäße Funkstation kann ebenso als Basisstation für andere Mobilfunknetze, für DECT-Schnurlos-Kommunikationssysteme und auch als Funkstationen zum schnurlosen Teilnehmeranschluß (wireless in the local loop) u.s.w. - sowohl auf der Netzseite, als auch auf der Teilnehmerseite - ausgeprägt sein.

Dabei zeigt
- FIG 1: zwei in Straßenlampen integrierte Funkstationen,
- FIG 2: zwei Varianten einer Beleuchtungseinrichtung mit integrierter Funkstation, jeweils in Seitenansicht (a und d), Ansicht von unten (b und e) und Ansicht von oben(c und f),
- FIG 3: zwei in Deckenbeleuchtungseinrichtungen integrierte Funkstationen in einem geschlossenen Raum,
- FIG 4: eine Ansicht von unten einer in einer Deckenbe leuchtungseinrichtung integrierten Funkstation,
- FIG 5: eine Funkstation, die in eine Verkehrsampel integriert ist, und
- FIG 6: eine Funkstation, die in ein beleuchetes Verkehrs schild integriert ist.

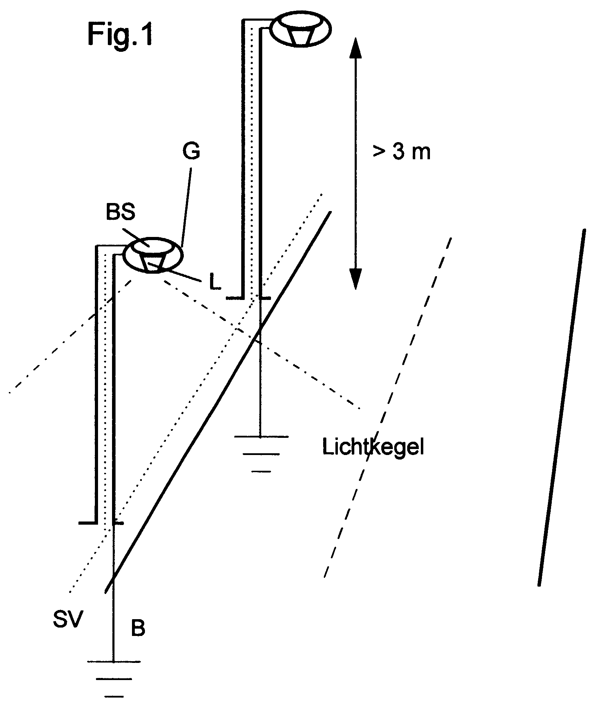

FIG 1 zeigt zwei Beleuchtungseinrichtungen in der Gestalt von Straßenlampen. Solche Straßenlampen werden zur Beleuchtung von Straßen, Fußwegen, Fußgängerzonen oder anderen Räumen mit viel Personenverkehr eingesetzt. Diese Straßenlampen werden im Abstand von mehreren Metern in einer Montagehöhe von größer 3 Metern auf Masten montiert. Zu Einzelheiten der Montage und Planung von Beleuchtungsanlagen wird auf C.H. Sturm und E. Klein, 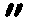 Betriebsgeräte und Schaltungen für elektrische Lampen", Siemens Aktiengesellschaft, Berlin, München, 1992, insbesondere Seiten 326 bis 330 verwiesen.

Die Beleuchtungseinrichtung weist ein Gehäuse G und einen Lichtstrahler L auf, wobei die Beleuchtungseinrichtung mit einer externen Stromversorgung SV und einer Einrichtung zum Blitzschutz B verbunden ist. Die Stromversorgung ist beispielsweise eine 230 Volt Wechselspannung. Der Blitzschutz B der Beleuchtungseinrichtung ist über den Mast durch eine Erdung am Fuße des Mastes realisiert.

In das Gehäuse G der Beleuchtungseinrichtung ist eine Funkstation BS integriert. Diese Basisstation BS ist als Mikro-Sende/Empfangsstation ausgeprägt und enthält Sende- und Empfangseinrichtungen und Einrichtungen zur Organisation und Steuerung der Basisstation BS. Die Basisstation BS ist beispielsweise Teil eines GSM-Mobilfunksystems und versorgt jeweils eine Mikrozelle. Zum inneren Aufbau einer Basisstation BS wird auf 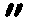 AirXpress-D900/D1800 Mobile Network Base Station equipment", Siemens Aktiengesellschaft vom Februar 1996 verwiesen. Zum netzseitigen Anschluß der Basisstation BS können vorhandene Kabelschächte des die Beleuchtungseinrichtung umfaßenden Beleuchtungssystems mitgenutzt werden.

Jede Basisstation BS versorgt einen Funkbereich, der zumindest in seinen Randbereichen mit Funkbereichen benachbarter Basisstationen BS überlappt. Gemäß dem Ausführungsbeispiel stellt die Basisstation BS Kanäle auf einer Trägerfrequenz bereit oder enthält nur die Einrichtungen, die innerhalb des GSM-Mobilfunksystems zur Versorgung der Mikrozelle mit funktechnischen Ressourcen unbedingt notwendig sind. Dadurch ist eine Miniaturisierung der Basisstation BS mit geringen Sendeleistungen von 0,01 bis 2,5 W möglich. Die Miniaturisierung und die verringerte Leistungsaufnahme erlauben es, die Basisstation BS in das Gehäuse G der Beleuchtungseinrichtung zu integrieren. Durch den einfachen Aufbau der Basisstation BS wird ebenso Aufwand bei der Überwachung, Steuerung und Wartung (O&M) der Basisstation BS eingespart.

Der Katalog 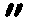 Außenbeleuchtungen" der Siemens Aktiengesellschaft, vom 1. Febr. 1993, Bestellnummer E 20002-K8420-A101-A3 zeigt beispielhafte Gehäuseformen für die Integration einer Basisstation BS in das Gehäuse G. Das Gehäuse G der Beleuchtungseinrichtung ist aufklappbar, so daß ein leichter Zugang zu Steckmodulen der Basisstation BS möglich ist.

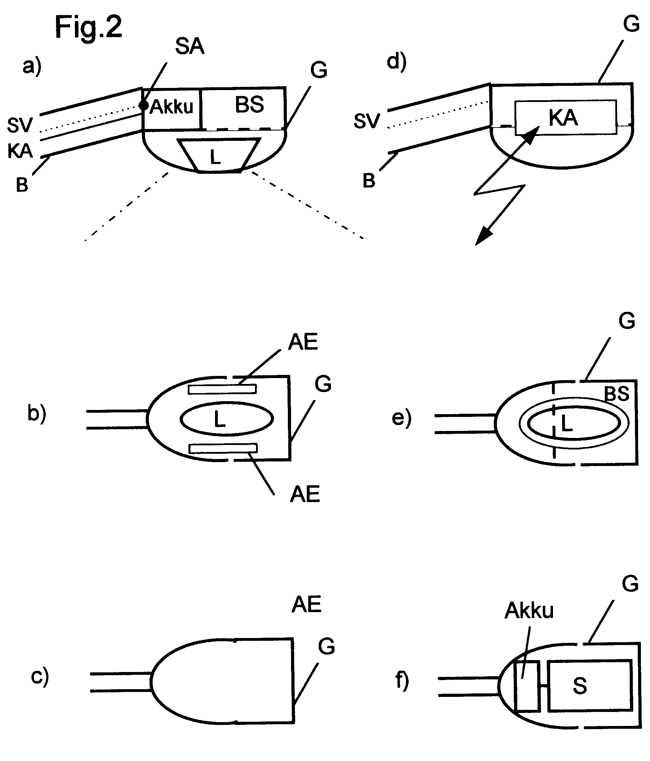

Nach FIG 2a erfolgt die Stromversorgung SV und der kommunikationstechnische Anschluß KA über den Mastansatz, wobei der Mastansatz ebenfalls die Einrichtung zum Blitzschutz B führt. Der Stromversorgungsanschluß SA der Basisstation stellt die Verbindung zwischen der externen Stromversorgung SV und der Einrichtung zur Energiespeicherung Akku dar.

Bei eingeschalteter Stromversorgung SV wird sowohl die als Batterie Akku ausgestaltete Einrichtung zur Energiespeicherung als auch die Basisstation BS mit einer Wechselspannung von 230 Volt versorgt. Gleichzeitig dient die Stromversorgung SV zum Betreiben der Beleuchtungseinrichtung L, die sich im unteren Teil des Gehäuses G befindet.

Gemäß FIG 2d kann der kommunikationstechnische Anschluß KA alternativ auch durch eine Funkverbindung erfolgen, wobei auf dem Gehäuse G Antenneneinrichtungen montiert sind, die mit benachbarten Beleuchtungseinrichtungen oder ähnlichen Einrichtungen über eine im Sinne einer Richtfunkstrecke ausgeprägten Funkschnittstelle verbunden sind. Die Funkschnittstelle kann über Infrarotsignale, in einem für Richtfunk reservierten Frequenzband oder im Frequenzband für Straßenverkehrskommunikationseinrichtungen (z.B. für Mautsysteme oder für ein Auto-Radar) oder gar im Frequenzband des Kommunikationssystems betrieben werden.

Zum kommunikationstechnischen Anschluß KA wird nach einer weiteren Ausprägung der Basisstation BS ein Funkkanal, der auch zum Versorgen der Zelle einsetzbar ist, benutzt. Damit müßten bei einer Anzahl aufgereihter Beleuchtungseinrichtungen mit Basisstationen BS nur eine Untermenge drahtgebunden kommunikationstechnisch versorgt werden, währenddessen die anderen auf obengenannte Weise im Sinne eines Daisy-Chain, o.ä. versorgt werden.

Da die durch die Funkverbindungen zu überwindenden Distanzen gering sind, kann mit geringen Sendeleistungen und platzsparend dimensionierten Antenneinrichtungen gearbeitet werden. Atmosphärische Störungen sind bei diesen geringen Distanzen unbedeutend und Störungen auf andere Kommunikationssysteme gering.

In den FIG 2b und 2e ist in einer Ansicht aus der Bodenperspektive das Gehäuse G der Beleuchtungseinrichtung gezeigt. Der Lichtstrahler L, dessen Abstrahlungsdiagramm kegelförmig ist hat eine optisch wenig abgeschattete Abstrahlungsapertur zur Erdoberfläche. An seiner Seite sind Antenneneinrichtungen AE montiert, die als Antenneneinrichtungen der Basisstation BS die funktechnische Versorgung der Mikrozelle vornehmen. Die Antenneneinrichtungen AE können auch mit Antennen für den kommunikationstechnischen Anschluß KA kombiniert werden.

In FIG 2e ist ein Spalt dargestellt, der unterhalb und alternativ auch an den Rändern des Gehäuses einen aufsteigenden Luftstrom aufnehmen kann. Dieser Luftstrom dringt in das Gehäuse G ein und ist thermisch mit einer Einrichtung KA zum Kühlen der Basisstation BS verbunden. Durch den Kamineffekt und die Strömung der aufsteigenden Luft wird ein zusätzlicher Kühleffekt für die Basisstation BS erzielt. Es kann dabei vorgesehen sein, daß der Lichtstrahler L gegenüber der Basisstation BS thermisch isoliert ist. Alternativ kann durch eine steuerbare Wärmeübertragung beispielsweise während der Nacht die Basisstation BS durch den Lichtstrahler L vorgeheizt werden. Die Ausgestaltung der thermischen Kopplung zwischen Lichtstrahler L und Basisstation BS kann besonders vorteilhaft genutzt werden, wenn die Basisstation BS z.B. während der Nachtstunden in einen Stand-by-Betrieb geschaltet ist.

Zur Kühlung der Basisstation BS können die stark erhitzten Einrichtungen auf einen Kühlkörper montiert sein, der thermisch leitend mit der Außenwand des Gehäuses G verbunden ist. Ebenso kann im Sinne eines Windrades Frischluft seitlich in das Gehäuse G eindringen und zur Kühlung der Basisstation BS beitragen.

Die FIG 2c und 2f zeigen eine Ansicht von oben auf das Gehäuse G der Beleuchtungseinrichtung. Auf der Oberseite des Gehäuses G oder den Seiten sind Luftauslaßschlitze vorgesehen, die zur Einrichtung zum Kühlen K der Basisstation Bs vorgesehen sind und den Luftauslaß ermöglichen. Diese Schlitze sind gegen das Eindringen von Regenwasser geschützt. Zusätzlich ist gemäß FIG 2f eine Einrichtung S zur Solarstromversorgung vorgesehen, die mit der Batterie (Akku) oder direkt mit der Stromversorgung SV verbunden ist. Über ein Solarpanel wird ein Teil der Lichtstrahlung absorbiert und in elektrische Energie umgewandelt, die zur Stromversorgung der Basisstation BS beiträgt.

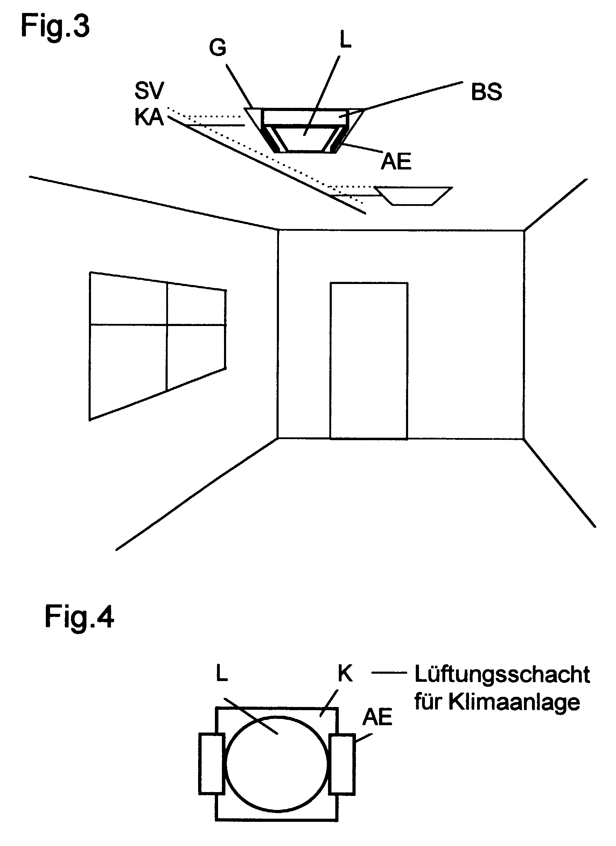

FIG 3 zeigt eine als Deckenbeleuchtung ausgeprägte Beleuchtungseinrichtung, in die eine Basisstation BS integriert ist. Zusätzlich zur externen Stromversorgung SV, die für die Beleuchtungseinrichtung und die Basisstation BS vorgesehen ist, liegt ein kommunikationstechnischer Anschluß KA vor, der die Basisstationen BS mit weiteren Einrichtungen des Mobil-Kommunikationssystemes, z.B. einem Basisstationscontroller verbindet.

Die Beleuchtungseinrichtung ist derartig in die Decke des Innenraumes eingebaut, daß eine Öffnung für den Lichtstrahler L und Oberflächen für die Montage von Antenneneinrichtungen AE der Basisstation BS sichtbar sind.

Die Integration der Basisstation BS in das Gehäuse G der Beleuchtungseinrichtung kann zum vollständigen Einschließen der Basisstation in dieses Gehäuse G oder nur zum teilweisen Einschließen führen.

Gemäß FIG 4 ist vorgesehen, zur Kühlung der Basisstation BS die Öffnung für den Lichtstrahler L und eventuell zusätzlich die Antenneneinrichtungen AE in einen Zugang für eine Klimaanlage K einzubringen, wobei die Klimaanlage K gleichzeitig zur Kühlung der Basisstation BS verwendet wird.

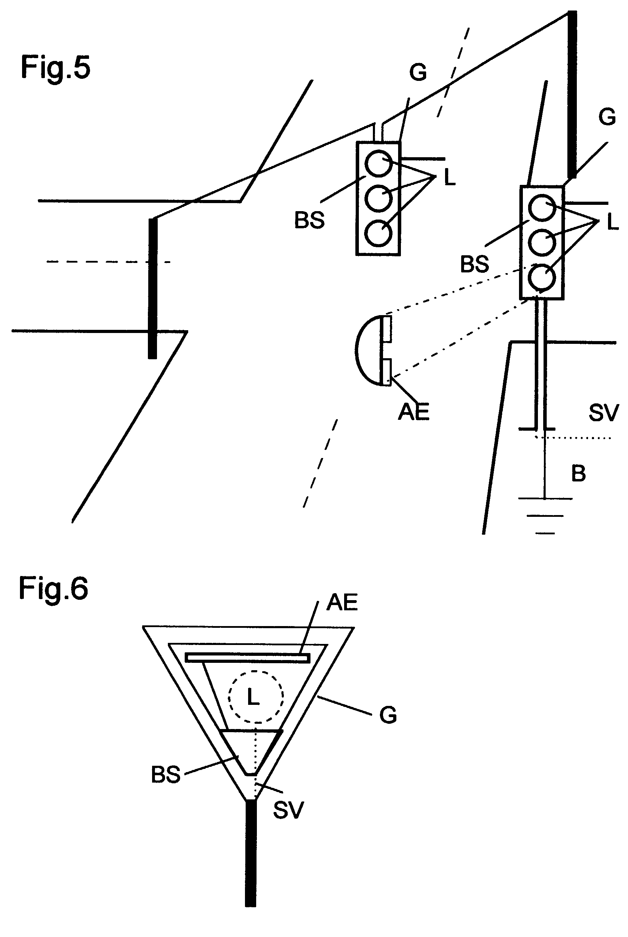

FIG 5 zeigt eine optische Signalisierungseinrichtung in Form einer Verkehrsampel. Solche Verkehrsampeln werden zur Signalisierung für den straßengebundenen Fahrzeugverkehr, aber auch für andere Verkehrsmittel und für Fußgänger eingesetzt. Diese Verkehrsampeln werden so z.B. an Straßenkreuzungen in einer Montagehöhe von größer 2,5 Metern auf Masten oder auch hängend an Seilen montiert. Zu Einzelheiten der Montage und Ausgestaltung von Verkehrsampeln wird auf die US Patentschrift US 2,925,458 verwiesen.

Die optische Signalisierungseinrichtung nach FIG 5 weist ein Gehäuse G und mehrere Lichtstrahler L auf, wobei die Signalisierungseinrichtung mit einer externen Stromversorgung SV und einer Einrichtung zum Blitzschutz B verbunden ist. Die Stromversorgung ist beispielsweise eine 230 Volt Wechselspannung. Der Blitzschutz B der Signalisierungseinrichtung ist über den Mast durch eine Erdung am Fuße des Mastes realisiert.

In das Gehäuse G der Signalisierungseinrichtung ist eine Basisstation BS integriert. Diese Basisstation BS ist wie in FIG 1 und 2 geschildert aufgebaut.

Antenneneinrichtungen AE der Basisstation BS sind an die Außenwand des Gehäuses der Signalisierungseinrichtung montiert, wobei eine Rundstrahlcharakteristik oder auch eine richtungsgebunden Abstrahlung erzielt werden kann. Die Antenneneinrichtungen AE der Basisstation BS nehmen die funktechnische Versorgung der Mikrozelle vor. Die Antenneneinrichtungen AE können auch mit Antennen für den kommunikationstechnischen Anschluß KA kombiniert werden. Der kommunikationstechnische Anschluß KA erfolgt nach einer alternativen Ausführungsform über eine Steuerung der Signalisierungseinrichtung. Insbesondere bei vernetzten Verkehrsleiteinrichtungen, z.B. in Großstädten werden somit bereits verlegte Übertragungsstrecken mitbenutzt.

Wie auch bei der Beleuchtungseinrichtung ist es vorteilhaft, die konstruktive Ausgestaltung der Antenneneinrichtungen AE an die eines Lichtstrahlers L zu koppeln. So kann eine Aussparung im Gehäuse G der Signalisierungseinrichtung den Lichtstrahler L zur optischen Signalisierung und eine Antenneneinrichtung AE aufnehmen. Der Lichtstrahler L und die entsprechende Antenneneinrichtung AE haben somit ähnliche Abstrahlungsdiagramme.

Es ist bekannt, die Steuerung einer Signalisierungseinrichtung mit dem Verkehrsaufkommen zu verbinden, indem z.B. bei einer Verkehrsampel die Ampelphasen für die besonders beanspruchte Durchlaßrichtung verlängert werden. In gleicher Weise kann die Information über das Verkehrsaufkommen zur Steuerung der Basisstation BS genutzt werden. Bei hohem Verkehrsaufkommen - damit liegt in der Regel auch eine hohe Nachfrage nach kommunikationstechnischer Versorgung vor - können beispielsweise zusätzliche Frequenzkanäle zugeschaltet werden.

Nach FIG 6 ist die optische Signalisierungseinrichtung als Verkehrsschild mit Lichtstrahler L ausgeprägt. Viele Verkehrsschilder oder Hinweisschilder sind beleuchtet, um sie besser sichtbar zu machen. Die in FIG 6 dargestellte innere Beleuchtung wird durch einen Lichtstrahler L realisiert, der im Gehäuse G des Verkehrsschildes angeordnet ist und dessen Strahlung eine z.B. verglaste Außenwand des Gehäuses G durchscheint. Auf dieser verglasten Außenwand ist die Signalisierungsnachricht des Verkehrschildes aufgebracht. Diese Signalisierungsnachricht ist im Dunklen durch die Beleuchtung gut sichtbar. Im Gehäuse G ist zusätzlich eine Basisstation BS integriert. Antenneneinrichtungen AE sind auf einer oder mehreren Außenwänden des Gehäuses G angebracht und sichern so die bestimmungsgemäße funktechnische Versorgung.

Bei der Auswahl und Montage der zuvor geschilderten Beleuchtungs- bzw. Signalisierungseinrichtungen ist zu beachten, daß Standorte mit hohem Personenaufkommen ausgewählt werden. Dabei ist auch auf eine möglichst große Verweildauer der Verkehrsteilnehmer im Funkereich der Basisstation zu achten, so daß Zonen mit einem stehenden Verkehr gegenüber Zonen mit fließenden Verkehr vorzuziehen sind.

## Patentansprüche

1. Funkstation (BS) für ein Mobil-Kommunikationssystem, mit einem netzseitigen kommunikationstechnischen Anschluß (KA) und mit einem Stromversorgungsanschluß (SA),
**dadurch gekennzeichnet,**
- daß die Funkstation (BS) in ein Gehäuse (G) einer optischen Signalisierungseinrichtung mit zumindest einem Lichtstrahler (L) und einer externen Stromversorgung (SV) integriert ist.

2. Funkstation (BS) für ein Mobil-Kommunikationssystem, mit einem netzseitigen kommunikationstechnischen Anschluß (KA) und mit einem Stromversorgungsanschluß (SA),
**dadurch gekennzeichnet,**
- daß die Funkstation (BS) in ein Gehäuse (G) einer Beleuchtungseinrichtung mit zumindest einem Lichtstrahler (L) und einer externen Stromversorgung (SV) integriert ist.

3. Funkstation (BS) nach Anspruch 1 oder 2,
**dadurch gekennzeichnet,**
daß der Stromversorgungsanschluß (SA) der Funkstation (BS) an die externe Stromversorgung (SV) angeschlossen ist.

4. Funkstation (BS) nach einem der vorhergehenden Ansprüche, mit einer Antenneneinrichtung (AE), deren Abstrahlungdiagramm mit dem des Lichtstrahlers (L) korrespondiert.

5. Funkstation (BS) nach einem der vorhergehenden Ansprüche,
**dadurch gekennzeichnet,**
daß das Gehäuse (G) mit einer Einrichtung (B) zum Blitzschutz verbunden ist, an die zusätzlich die Funkstation (BS) angeschlossen ist.

6. Funkstation (BS) nach einem der vorhergehenden Ansprüche, mit einer durch die Stromversorgung (SV) gespeisten Einrichtung (Akku) zur Energiespeicherung, die zur Versorgung der Funkstation (BS) bei abgeschalteter externer Stromversorgung (SV) vorgesehen ist.

7. Funkstation (BS) nach einem der vorhergehenden Ansprüche, mit einer Einrichtung (K) zum Kühlen der Funkstation (BS), die mit einem externen Luftstrom thermisch gekoppelt ist.

8. Funkstation (BS) nach einem der vorhergehenden Ansprüche, bei der der kommunikationstechnischen Anschluß (KA) der Funkstation (BS) über eine Funkverbindung erfolgt.

9. Funkstation (BS) nach Anspruch 8,
bei der die Funkverbindung über Infrarotsignale von weiteren Standorten sichergestellt wird.

10. Funkstation (BS) nach Anspruch 8,
bei der die Funkverbindung über Signale im Frequenzband von Straßenverkehrskommunikationseinrichtungen von weiteren Standorten sichergestellt wird.

11. Funkstation (BS) nach einem der vorhergehenden Ansprüche, die an einem Standort mit freier Abstrahlung in direkter Linie zu einem Endgerät (MS).

12. Funkstation (BS) nach einem der vorhergehenden Ansprüche, mit einer Montagehöhe von mindestens 2,5 m.

13. Funkstation (BS) nach einem der vorhergehenden Ansprüche, mit einer Einrichtung (S) zur Solarstromversorgung.

14. Funkstation nach einem der Ansprüche 1 oder 3 bis 13, bei der die optische Signalisierungseinrichtung durch eine Verkehrsampel realisiert ist.

15. Funkstation nach einem der Ansprüche 2 bis 13, bei der die Beleuchtungseinrichtung durch eine Straßenlaterne realisiert ist.
